# EUROPEAN PATENT SPECIFICATION

(11) **EP 1 130 740 B1**
(45) Date of publication and mention of the grant of the patent: **23.01.2008**
(21) Application number: 00118187.4
(22) Date of filing: 30.08.2000
(51) Int. Cl.: H02K 1/27, H02K 21/14, H02K 21/02, B60K 6/20, B60L 11/12

(54) **Hybrid electric vehicle with a permanent magnetic type dynamo-electric machine**
Elektrisches Hybridfahrzeug mit einer dynamoelektrischen Permanentmagnetmaschine
Véhicule électrique hybride avec une machine électrodynamique à aimant permanent

(30) Priority: 02.03.2000 JP 2000061890
(43) Date of publication of application: 05.09.2001
(73) Proprietor: Hitachi, Ltd., Tokyo 100-8280 (JP)
(72) Inventor: Matsunobu, Yutaka, Hitachi Ltd., Intellectual Property Group, Chiyoda-ku, Tokyo 100-8220 (JP); Tajima, Fumio, Hitachi Ltd., Intellectual Property Group, Chiyoda-ku, Tokyo 100-8220 (JP); Kawamata, Shouichi, Hitachi Ltd. Intellectual Property Group, Chiyoda-ku, Tokyo 100-8220 (JP); Koizumi, Osamu, Hitachi Ltd. Intellectual Property Group, Chiyoda-ku, Tokyo 100-8220 (JP); Obara, Sanshiro, Hitachi Ltd. Intellectual Property Group, Chiyoda-ku, Tokyo 100-8220 (JP)
(74) Representative: Beetz & Partner

(56) References cited:
- DE-A- 4 339 703
- DE-A- 4 342 735
- DE-A- 19 747 265
- US-A- 5 343 970
- US-A- 5 811 904
- US-A- 6 048 289
- PATENT ABSTRACTS OF JAPAN vol. 1996, no. 6, 28 June 1996 (1996-06-28) & JP 08 033246 A (YASKAWA ELECTRIC CORP), 2 February 1996 (1996-02-02)

## Description

### BACKGROUND OF THE INVENTION

### FIELD OF THE INVENTION

The present invention relates to a hybrid electric vehicle employing a permanent magnetic type dynamo-electric machine, and more particularly to a permanent magnetic type dynamo-electric machine structured such that a plurality of permanent magnets are inserted in a peripheral direction of a rotor, and a hybrid electric vehicle in which the dynamo-electric machine and an engine are connected to a drive shaft in series and no switching gear between forward and backward movements is provided.

### DESCRIPTION OF THE PRIOR ART

A power property of the vehicle is 1.05 to 1.2 times larger in a speed change ratio of a forward first speed than in a speed change ratio of a backward speed. This power property is required in an electric vehicle including a hybrid vehicle in the same manner, and a greatest torque should be output in the case of backward movement.

In this case, in conventional, in order to intend to increase an output of a permanent magnet type dynamo-electric machine, there has been known a permanent magnet type dynamo-electric machine in which a shape of magnets in a rotor is formed in nonsymmetrical at each pole and a motor-driven vehicle employing the same. As representative embodiments, there are Japanese Patent Unexamined Publication Nos. 8-33246, 9-182331 and 9-271151.

The structure described in Japanese Patent Unexamined Publication Nos. 8-33246 and 9-182331 is made such that in order to provide a permanent magnet type dynamo-electric machine suitable for one way rotation, a punching hole for preventing a leakage flux is provided between the magnets, and a permanent magnet inserting hole is provided in an inner portion of an iron core in a rotor at a predetermined inclined angle with respect to a circumferential direction or a permanent magnet is arranged so as to be shifted in a direction of rotation (normal rotation), thereby increasing a total amount of magnetic flux and utilizing a reluctance torque so as to increase an output.

Further, the structure described in Japanese Patent Unexamined Publication No. 9-271151 is a permanent magnet type dynamo-electric machine for a motor-driven vehicle in which a magnet inserting hole is made long and a permanent magnet is arranged in a shifted manner, thereby increasing a torque. Further, as a conventional embodiment of a permanent magnet type dynamo-electric machine for an electric vehicle, there is a structure described in Japanese Patent Unexamined Publication No. 9-261901. This technique corresponds to a structure in which the arrangement of the permanent magnet is defined by a distance from a center of the rotor in order to intend to reduce the leakage flux.

In this case, among the conventional arts mentioned above, at first, in the former structure in which "the permanent magnets are nonsymmetrical at each pole", it is possible to increase the torque, however, it is intended to strengthen the magnetic flux in the direction of rotation (normal rotation), so that the structure is applied to the dynamo-electric machine suitable for one way rotation. Further, the latter structure in which "the permanent magnets are nonsymmetrical at each pole" of course has the same power property at both of the forward movement (normal rotation) and the backward movement (reverse rotation). Accordingly, it is unavoidable to be the dynamo-electric machine which can output 1.05 to 1.2 times the torque inherently required at the forward movement (the same torque as that at the backward movement). Since an amount of magnetic flux is much together with outputting an unnecessary high torque, a weakening field current at a time of high speed rotation is increased so as to reduce an efficiency.

In particular, in a hybrid electric vehicle in which a permanent magnet type dynamo-electric machine and an engine are connected to a drive shaft in series and no gear for switching between forward and backward movements is provided, since a torque of the engine is applied at a time of forward movement, it is not necessary that the forward torque is a high torque. Further, since the dynamo-electric machine and the engine are connected to the drive shaft in series, a rotational number of the dynamo-electric machine becomes the same as that of the engine, so that a specific fuel consumption is reduced unless a high efficiency is achieved at a time of high speed rotation.

On the contrary, at a time of backward movement, since the gear for switching between the forward and backward movements is not provided, a high torque corresponding to 1.05 to 1.2 times the forward movement is required only by the dynamo-electric machine. In this case, at a time of backward movement, since the engine and the dynamo-electric machine are disengaged by the clutch, a high speed rotation is not performed. Document DE 19747265 A1 discloses also a hybrid electric vehicle employing a permanent magnet type dynamo electric machine. In this structure, a reverse motion of the vehicle can be achieved only by the electric motor, whereas the vehicle is driven by both motors when driving forward.

### SUMMARY OF THE INVENTION

The present invention is made by taking the points mentioned above into consideration, and an object of the present invention is to provide a hybrid electric vehicle employing a permanent magnet type dynamo-electric machine structured such that a torque at a time of reverse rotation is greater than a maximum torque output by a dynamo-electric machine when the dynamo-electric machine normally rotates.

Further, another object of the present invention is to provide a hybrid electric vehicle in which a dynamo-electric machine and an engine are connected to a drive shaft in series and no gear for switching between forward and backward movements is provided, wherein there is employed a permanent magnet type dynamo-electric machine structured such that a torque output by the dynamo-electric machine when the hybrid electric vehicle moves backward (the dynamo-electric machine reverse rotates) is greater than a maximum torque output by the dynamo-electric machine when the hybrid electric vehicle moves forward (the dynamo-electric machine normally rotates).

In order to achieve the object mentioned above, in accordance with the present invention, there is provided a hybrid electric vehicle employing the permanent magnet type dynamo-electric machine comprising the features of claim 1.

Further, in the permanent magnet type dynamo-electric machine, the ratio between the normal and reverse rotations establishes a relation 1 : 1.05 to 1 : 1.2, whereby the torque at the reverse rotation becomes greater.

Further, in accordance with the present invention, the structure is preferably made such that a width in a rotational direction of a permanent magnet inserting hole provided within the rotor iron core is larger than a width of the permanent magnet, and a space generated by a difference of length between the both is arranged in a normal rotation side of the dynamo-electric machine.

Further, in accordance with the present invention, the structure is preferably made such that a rotor having no punching hole for preventing a leakage flux is provided, a permanent magnet inserting hole provided within the rotor iron core is provided at a predetermined inclined angle with respect to a circumferential direction so that a distance from the rotational gap is greater in the normal rotation side of the dynamo-electric machine, and the permanent magnet is inserted to the inserting hole.

Further, in accordance with the present invention, the structure is preferably made such that a cross sectional shape of the permanent magnet inserting hole and the permanent magnet is a rectangular shape.

Further, in accordance with the present invention, the structure is preferably made such that a cross sectional shape of the permanent magnet inserting hole and the permanent magnet is an arc shape.

Further, in accordance with the present invention, the structure is preferably made such that a ratio between a width in a rotational direction of the permanent magnet inserting hole provided within the rotor iron core and a width of the permanent magnet is 1 : 0.5 to 1 : 0.9.

Further, in accordance with the present invention, the structure is preferably made such that the permanent magnet inserting hole provided within the iron core forms a predetermined inclined angle θ = 10 to 45 degrees (mechanical angle) with respect to a circumferential direction.

Further, in accordance with the present invention, in order to achieve the object mentioned above, there is provided a hybrid electric vehicle having a dynamo-electric machine and an engine connected to a drive shaft in series and having no gear for switching between forward and backward movements, wherein the dynamo-electric machine is a permanent magnet type dynamo-electric machine having each of the features mentioned above.

### BRIEF DESCRIPTION OF THE DRAWINGS

Fig. 1 is a cross sectional view of a main portion of a permanent magnet type dynamo-electric machine in accordance with a first embodiment of the present invention;
Fig. 2 is a view showing a magnetic field analysis in the case that a relation b/a = 0.85 in Fig. 1 is established;
Fig. 3 is a view showing a magnetic flux density of a rotational gap between P1 and P2 in Fig. 2;
Fig. 4 is a view showing a forward movement torque and a backward movement torque in the case of changing the value b/a in Fig. 2;
Fig. 5 is a view showing a relation between a ratio between the forward and backward movement torque and the value b/a in Fig. 4;
Fig. 6 is a view showing an embodiment of a structure of a hybrid electric vehicle employing a permanent magnet type dynamo-electric machine in accordance with the present invention;
Fig. 7 is a view showing a difference of a torque curve between the present invention and the conventional embodiment;
Fig. 8 is a view showing a magnetic field analysis in the case of applying the present invention to an embodiment having sixteen poles (b/a = 0.9);
Fig. 9 is a view showing a relation between a ratio between the forward and backward movement torque and the value b/a in the case of changing the value b/a in Fig. 8;
Fig. 10 is a cross sectional view of a main portion of a permanent magnet type dynamo-electric machine in accordance with a second embodiment of the present invention;
Fig. 11 is a view showing a magnetic flux density of a rotational gap between P1 and P2 in Fig. 10; and
Fig. 12 is a view showing a relation between the forward and backward movement torque and the value b/a in the case of changing θ in Fig. 10.

### DESCRIPTION OF THE PREFERRED EMBODIMENTS

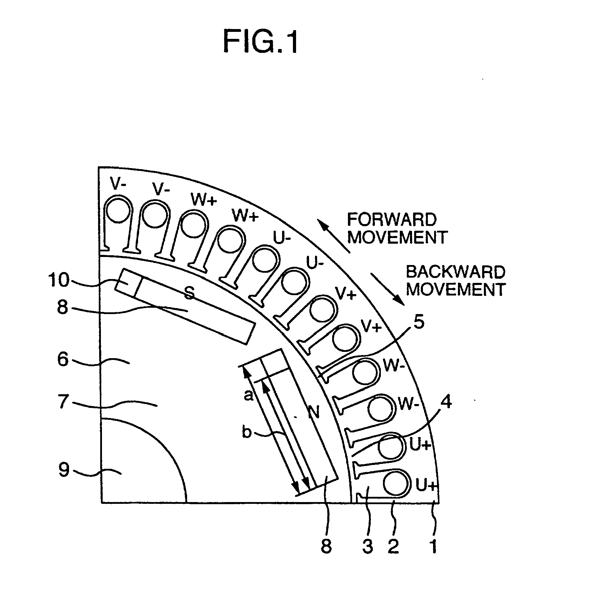

A description will be given below of a first embodiment in which the present invention is applied to a permanent magnet type dynamo-electric machine having three phases, eight poles and forty eight slots with reference to Fig. 1 showing one pole pair. At first, in Fig. 1, a stator 1 is the same as that of the conventional structure, and is constituted by inserting and arranging U-phase stator coils U1, V-phase stator coils V1 and W-phase stator coils W1 to forty eight slots 3 formed in an annular stator iron coil 2. An opening portion 4 is formed in an inner peripheral portion of the stator iron core in correspondence to each of the slots.

On the contrary, a rotor 6 is arranged in the stator 1 at a rotational gap and is structured such as to have auxiliary protruding poles in which a plurality of permanent magnets are arranged and fixed within a rotor iron core in a peripheral direction. That is, the rotor 6 is constituted by fitting and adhering a stator iron core 7 to a rotary shaft 9 and inserting and assembling a permanent magnet 8 having a width (b) in a rotational direction, for example, made of neodymium to a rectangular punching hole having a width (a) in the rotational direction and formed in a peripheral direction of an outer peripheral portion of the rotor iron core 7 from an axial direction so that N-pole and S-pole are alternately arranged in respective receiving portions. Further, the rotor 6 is rotatably arranged within the stator 1 in a state of having a predetermined rotational gap 5 with respect to an inner peripheral portion of the stator iron core 2. In this case, the rotor iron core 7 is constituted by laminating a multiplicity of silicon steel sheets on which holes for forming the receiving portions are formed.

In this case, the width (a) in the rotational direction of the punching hole is larger than the width (b) in the rotational direction of the permanent magnet, and the space 10 generated by a difference between the lengths (a) and (b) is arranged in a direction of normal rotation, that is, a direction of forward movement of the hybrid electric vehicle. In this case, since the rotor becomes nonsymmetrical per each pole, the maximum torque becomes different in the case of normal rotation and reverse rotation, that is, the normal rotation having the space 10 has a low torque and the reverse rotation has a high torque. Further, a torque ratio between the normal rotation and the reverse rotation is determined by a ratio between the values a and b, and since both of the cases that a relation b/a = 1 is established (that is, the case that the punching hole and the magnet width are equal and the space 10 does not exist) and that a relation b/a = 0 is established (that is, the case that the magnet does not exist and only the space exists, so-called reluctance torque motor) are symmetrical at each pole, the torque of the normal rotation and the torque of the reverse rotation are equal to each other. On the contrary, since the case that a relation b/a = 0.5 is established (that is, the case that the width of the permanent magnet and the space 10 are equal) is most nonsymmetrical at each pole, the ratio between the torque of the normal rotation and the torque of the reverse rotation becomes maximum.

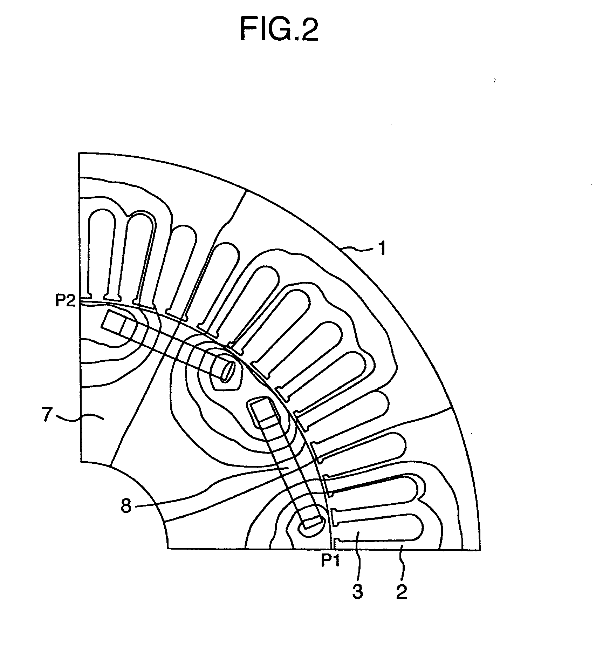

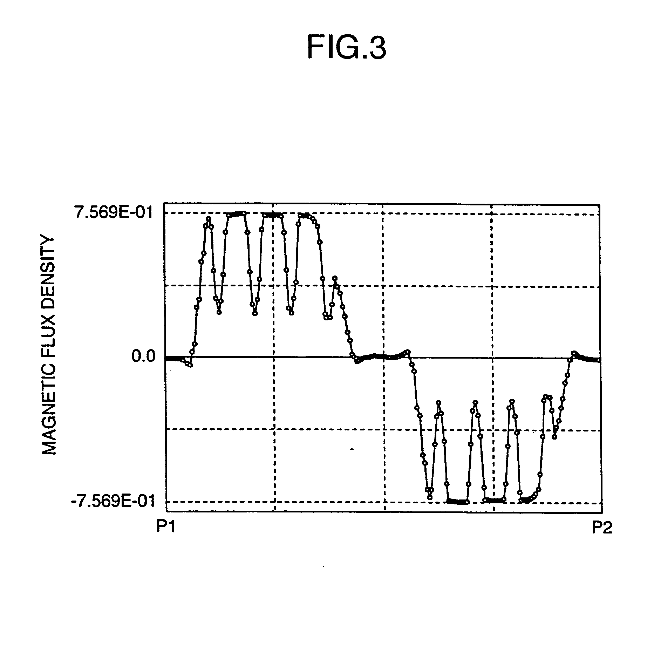

Fig. 2 shows a result of a magnetic field analysis in the case that the relation b/a = 0.85 is established in a dynamo-electric machine having an output 60 kW and Fig. 3 shows a distribution of a magnetic flux density of the rotational gap between P1 and P2 in the dynamo-electric machine in Fig. 2. In accordance with Fig. 3, since the magnetic flux density in the direction of normal rotation is low and the magnetic flux density in the direction of reverse rotation is high, it is known that the reverse rotation torque is larger than the normal rotation torque.

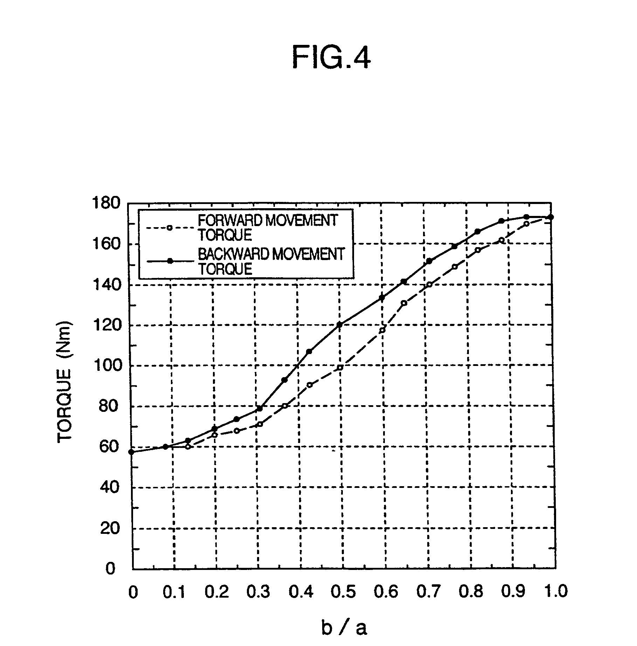

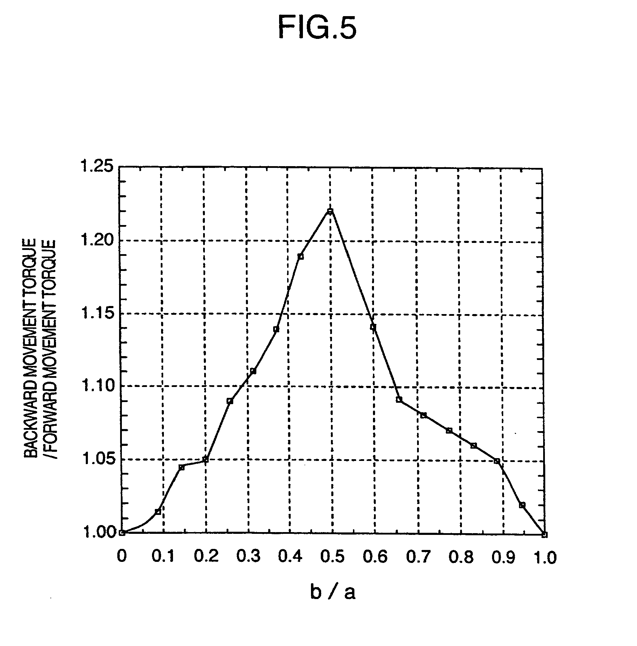

Further, Fig. 4 shows the forward movement torque and the backward movement torque in the case of changing the value b/a in the dynamo-electric machine shown in Fig. 2 and Fig. 5 shows a relation between a ratio between the forward and backward movement torque (the backward movement torque/forward movement torque) and the value b/a.

In accordance with Fig. 4, the torque is largest in the case that the relation b/a = 1 is established in both of the forward and backward movements, the torque is reduced as the value b/a becomes smaller, and the torque is smallest in the case that the relation b/a = 0 is established. However, in the case that the relation b/a > 0.5 is established, a reduction degree of the backward movement torque is smaller than that of the forward movement torque. In accordance with Fig. 5, it is known that the value b/a should be set to 0.5 to 0.9 in order to make the ratio between the forward and backward torque 1.05 to 1.2. If it is intended that the torque ratio is simply made 1.05 to 1.2, the value b/a 0.15 to 0.5 is sufficient, however, in this case, since the torque becomes too low as is apparent from Fig. 4, the value is improper.

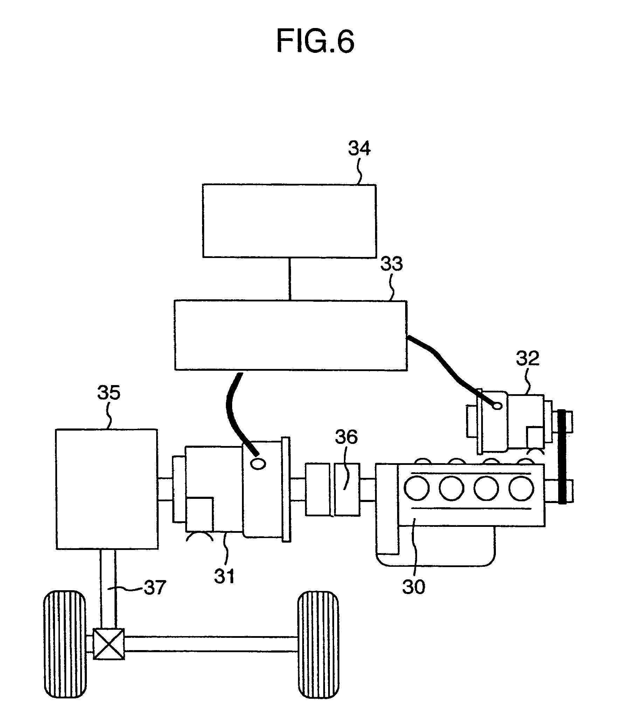

Here, Fig. 6 shows an embodiment of a structure of a hybrid electric vehicle corresponding to a subject of the present invention. A drive system is mainly constituted by an engine 30, a motor 31 for driving an electric vehicle, a power generator 32 driven by the engine and used for charging a battery or the like, an inverter/converter 33, a battery 34, a drive shaft 37, a speed change gear (for example, a CVT) 35, and a clutch 36. In this case, since the drive motor 31 functions as a power generator for regeneration at a time of reducing speed, the drive motor 31 may be sometimes called as a dynamo-electric machine. In this hybrid electric vehicle, the structure is made such that the engine 30, the clutch 36, the dynamo-electric machine (driving motor) 31, the speed change gear 35 and the drive shaft 37 are connected to each other in series, and the speed change gear 35 does not have a gear for switching the front and backward movements.

Operations in respective travel modes are as follows:
(1) Stop time: the engine is stopped, the clutch is turned off and the motor is in an idle state (in this case, in the case that a charging amount of the battery is a little, the engine is driven so as to rotate the dynamo-electric machine as a power generator, thereby charging the battery).
(2) Low speed traveling time: the engine is stopped, the clutch is turned off and the motor is driven (in this case, in the case that the charging amount of the battery is a little, the engine is driven so as to rotate the power generator, thereby charging the battery).
(3) Middle and high speed traveling time: the engine is driven, the clutch is turned on and the motor is rotates in an accompanying manner (no output).
(4) High speed accelerating time: the engine is driven, the clutch is turned on and the motor is driven.
(5) Speed reducing time: the engine is rotated due to inertia, the clutch is turned on and the motor is regenerated (may be regenerated by the power generator).
(6) Backward moving time: the engine is stopped, the clutch is turned off and the motor is driven (in this case, in the case that the charging amount of the battery is a little, the engine is driven so as to rotate the power generator, thereby charging the battery).

Since the backward movement is driven only by the motor, the motor torque at the backward moving time is large. On the contrary, the low speed travel is driven only by the motor, however, in the case that the torque is insufficient, the clutch is turned on so as to drive the engine, whereby it is easy to supplement the insufficient torque.

Taking only the low speed side into consideration, the conventional motor having the relation b/a = 1 is sufficient, however, in the hybrid electric vehicle travel modes (3) and (4), the motor is driven or rotates in an accompanying manner even at the middle and high speed rotation time. In this case, when the magnetic flux of the magnet is great, an iron loss becomes great and a weakening field current is increased since the magnetic flux amount is restricted, so that a performance is reduced.

In accordance with the permanent magnet type dynamo-electric machine of the present invention, the torque in the backward movement side is secured, the insufficient torque at the low speed rotation time in the forward movement side is supplemented by an assistance of the engine, and the magnetic flux amount at the middle and high speed time is reduced, whereby it is possible to improve the performance such as an efficiency at the middle and high speed time or the like, and achieve a drive system suitable for the hybrid electric vehicle.

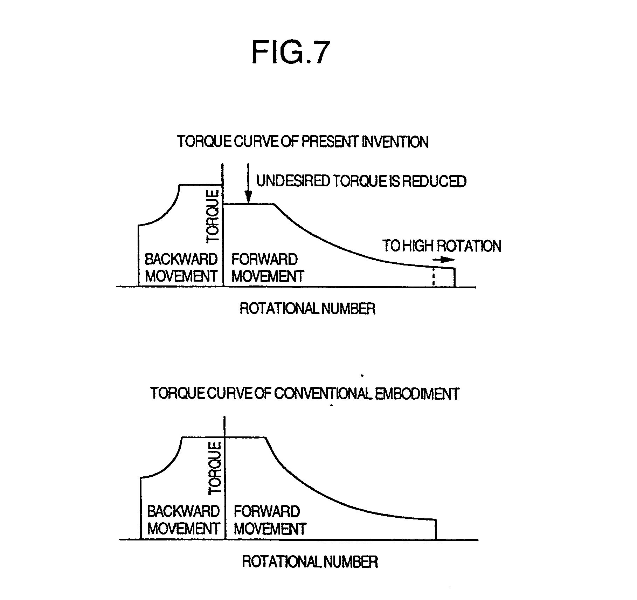

Fig. 7 shows the motor torque in the case of the present invention (b/a = 0.9) and the conventional embodiment (b/a =1). In accordance with this embodiment, the present invention can about 10% improve the rotational number in comparison with the conventional embodiment, and can about 1% improve the motor efficiency in the high speed side from 90% in the conventional one to 91% in the present invention.

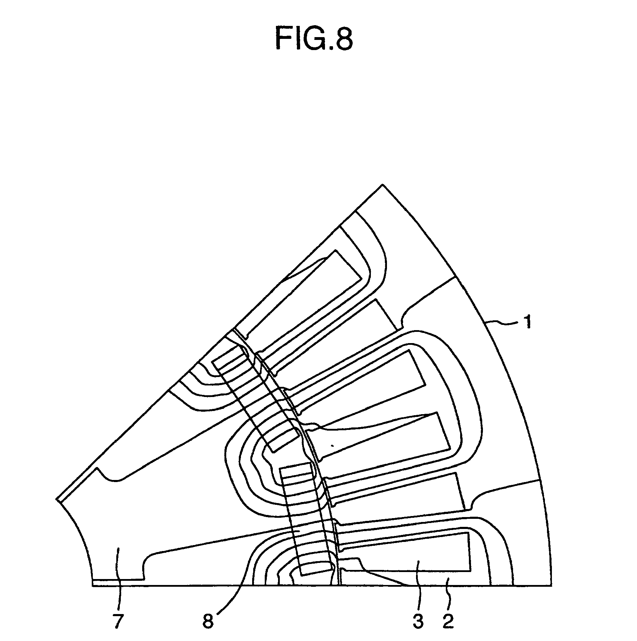

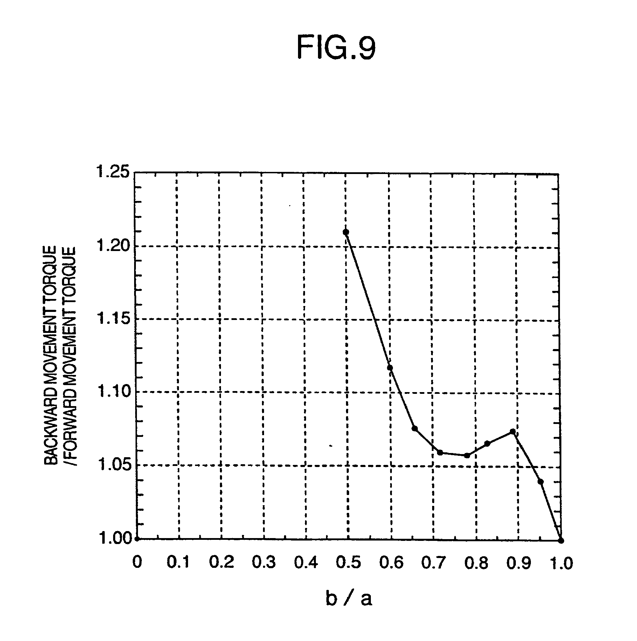

In order to verify a wide use property of the present invention, the same verification is performed in the dynamo-electric machine having an output 20 kW and 16 poles. Fig. 8 shows a result of a magnetic field analysis in the case that the relation b/a = 0.9 is established, and Fig. 9 shows a relation (in this case, between 0.5 and 1) between a ratio between the forward and backward movement torque (backward movement torque/forward movement torque) and the value b/a in the case of changing the value b/a in the dynamo-electric machine in Fig. 8. In accordance with Fig. 9, it is known that the value b/a is between 0.5 and 0.9 in order to make the forward and backward movement torque ratio between 1.05 and 1.2 even in the structure having 16 poles.

Further, in the present invention, in order to change the torque of the forward and backward movements, in addition to the method of partly forming the space as mentioned above, it is possible to achieve by the structure in which the permanent magnet inserting hole provided within the rotor iron core is provided at a predetermined inclined angle (θ) with respect to the circumferential direction, and the dynamo-electric machine and the front movement (normal rotation) side of the hybrid electric vehicle employing the same are provided so that a distance from the rotational gap is increased. In this case, the inclined angle (*θ*) means an inclined angle with respect to a tangent line in a center (in a rotational direction) of the permanent magnet.

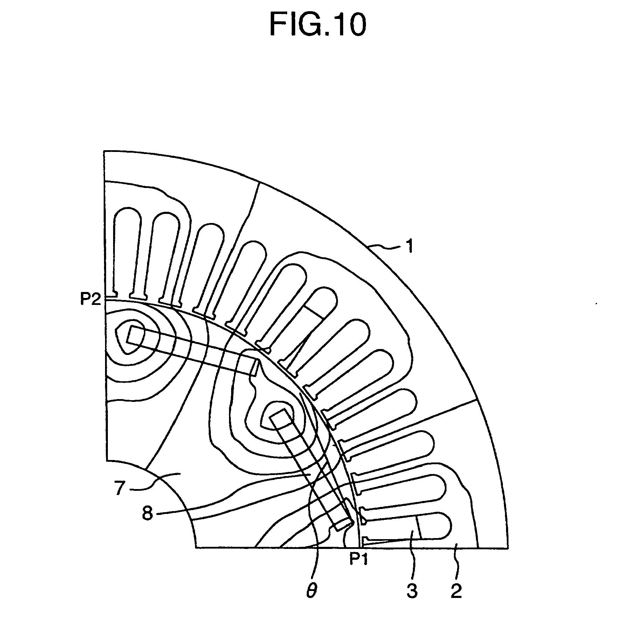

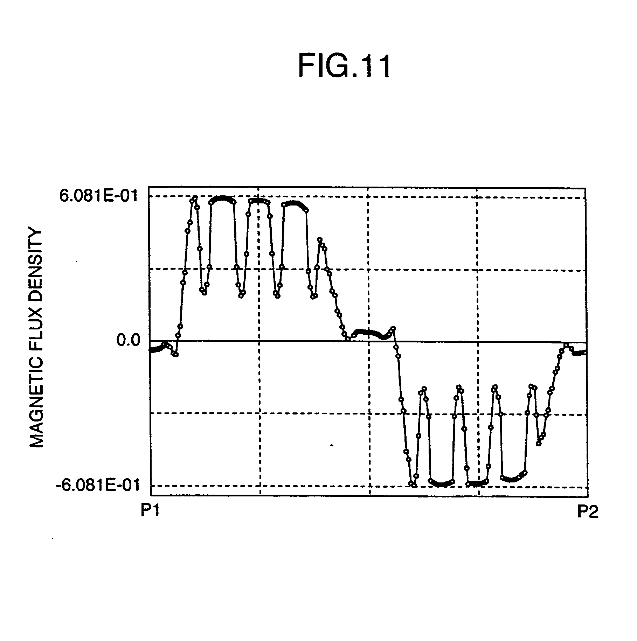

Fig. 10 shows a result of magnetic field analysis in the case that a relation θ = 10 degrees (mechanical angle) in a dynamo-electric machine having an output 60 kW and eight poles, and Fig. 11 shows a distribution of a magnetic flux density of a rotational gap between P1 and P2 in the dynamo-electric machine in Fig. 10. As is apparent from Fig. 11, since the magnetic flux density in the direction of the normal rotation is low and the magnetic flux density in the direction of the reverse rotation is high, it is known that the reverse rotation torque is larger than the normal rotation torque even in this case. In the case that the mechanical angle is 0 or 90 degrees, the torque ratio becomes 1 due to a symmetrical property at each pole. On the contrary, in the case of 45 degree, the torque ratio becomes greatest due to most nonsymmetrical property.

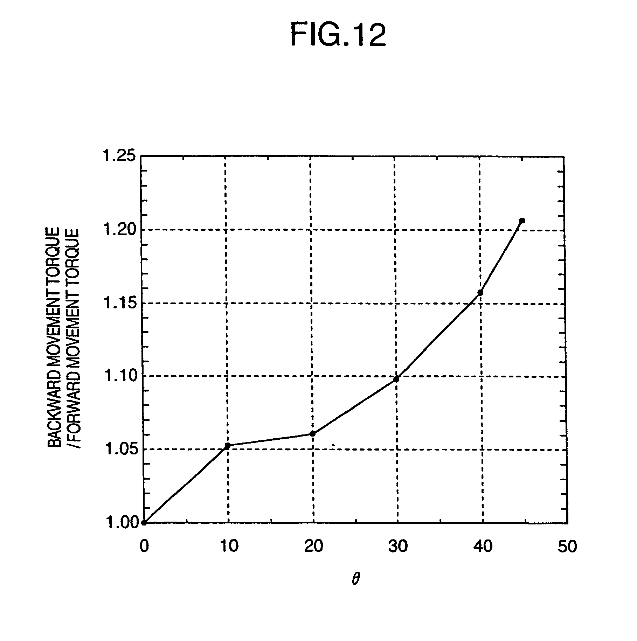

Fig. 12 shows the inclined angle (*θ*) and the ratio of the forward and backward movement torque. As is apparent from Fig. 12, when the angle *θ* is set to 10 to 45 degrees, it is possible to make the ratio of the forward and backward torque between 1.05 and 1.2.

Further, in accordance with the present invention, the shape of the magnet is not limited to the rectangular shape shown in the first embodiment, but can employ various shapes such as an arc shape or the like. Further, the permanent magnet 8 may employ the other magnets than the neodymium magnet, the number of (the number of the poles of) the permanent magnets may employ the other number than eight poles and sixteen poles, and the number of the slots of the stator may employ the other number than forty eight. In this case, the magnet is not limited to the inner rotation type and can be established by an outer rotation type.

In accordance with the present invention, since the ratio between the maximum torque output by the dynamo-electric machine at the normal rotation (forward movement) time and the torque output by the dynamo-electric machine at the reverse rotation (backward movement) time is 1 : 1.05 - 1.2 and becomes greater in the backward movement, it is possible to reduce the unnecessary torque (magnetic flux) at the normal rotation (forward movement) so as to improve the efficiency at the high speed and further improve the specific fuel consumption. Further, it is possible to provide the hybrid electric vehicle with compact, light and high efficiency which can output a predetermined torque at the backward movement.

Further, since it is possible to reduce the iron loss by reducing the magnetic flux at the high speed rotation, it is not necessary to use the low iron loss steel sheet so as to reduce the cost. In this case, since it is possible to reduce the amount of the magnet in the structure using the space so as to be nonsymmetrical as the first embodiment, it is possible to reduce the cost of the magnet.

## Claims

1. A hybrid electric vehicle employing a permanent magnet type dynamo-electric machine (31) comprising:
a permanent magnet type dynamo-electric machine (31), said permanent type magnet type dynamo-electric machine (31) having a stator (1) having a stator iron core (2) around which a stator coil is wound, and a rotor (6) arranged in said stator (1) at a rotational gap (5), having a plurality of permanent magnets (8) arranged and fixed within a rotor iron core (7) in a peripheral direction, and having auxiliary protruding poles;
said dynamo-electric machine (31) and an engine (30) being connected to a drive shaft (37) in series; and
no switching gear between forward and backward movements being provided;
**characterized in that** a ratio between a maximum torque output by said dynamo-electric machine (31) when the electric vehicle moves forward and a torque output by the dynamo-electric machine (31) during reverse moving establishes a relation of 1:1.05 to 1:1.2, wherein the torque during the reverse rotation is greater than the maximum torque output when the electric vehicle moves forward, wherein a shape in a circumferential direction of said rotor (6) at each pole is non symmetrical.

2. A hybrid electric vehicle employing a permanent magnet type dynamo-electric machine (31) as claimed in claim 1, wherein the ratio between the normal and reverse rotations establishes a relation 1:1.05 to 1:1.2, whereby the torque at the reverse rotation becomes greater.

3. A hybrid electric vehicle employing a permanent magnet type dynamo-electric machine (31) as claimed in claim 1 or 2, wherein a width in a rotational direction of a permanent magnet inserting hole provided within said rotor iron core (7) is larger than a width of said permanent magnet (8), and a space (10) generated by a difference of length between the both is arranged in a forward movement side of said electric vehicle.

4. A hybrid electric vehicle employing a permanent magnet type dynamo-electric machine (31) as claimed in claim 1 or 2, wherein a permanent magnet inserting hole provided within said rotor iron core (7) is provided at a predetermined inclined angle (θ) with respect to a circumferential direction so that a distance from the rotational gap (5) is greater in the normal rotation side of the dynamo-electric machine (31), and said permanent magnet (8) is inserted to said inserting hole.

5. A hybrid electric vehicle employing a permanent magnet type dynamo-electric machine (31) as claimed in claim 4, wherein said inclined angle (θ) is 10 to 45 degrees (mechanical angle).

6. A hybrid electric vehicle employing a permanent magnet type dynamo-electric machine (31) as claimed in claims 1 to 3, wherein a cross sectional shape in the rotational direction of said permanent magnet inserting hole and said permanent magnet (8) is a rectangular shape.

7. A hybrid electric vehicle employing a permanent magnet type dynamo-electric machine (31) as claimed in claims 1 to 3, wherein a cross sectional shape in the rotational direction of said permanent magnet inserting hole and said permanent magnet (8) is an arc shape.

8. A hybrid electric vehicle employing a permanent magnet type dynamo-electric machine (31) as claimed in any one of claims 1 to 7, wherein a ratio between a width in a rotational direction of the permanent magnet inserting hole provided within said rotor iron core (7) and a width in the rotational direction of said permanent magnet is 1:0.5 to 1:0.9.

## Patentansprüche

1. Elektrisches Hybridfahrzeug, das eine dynamoelektrische Dauermagnetmaschine (31) verwendet, mit:
einer dynamoelektrischen Dauermagnetmaschine (31), wobei die dynamoelektrische Dauermagnetmaschine (31) einen Stator (1) mit einem Statoreisenkern (2), um den eine Statorspule herumgewickelt ist, und einen Rotor (6) aufweist, der in dem Stator (1) in einem Rotationsspalt (5) angeordnet ist, mit mehreren Dauermagneten (8), die innerhalb eines Rotoreisenkerns (7) in Umfangsrichtung angeordnet und befestigt sind, und mit vorstehenden Hilfspolen;
wobei die dynamoelektrische Maschine (31) und ein Motor (30) mit einer Antriebswelle (37) in Reihe verbunden sind; und kein Getriebe zum Umschalten zwischen Vorwärts- und Rückwärtsbewegungen vorgesehen ist;
**dadurch gekennzeichnet, dass** ein Verhältnis zwischen einer maximalen Drehmomentausgabe durch die dynamoelektrische Maschine (31), wenn sich das elektrische Fahrzeug vorwärts bewegt, und einem Drehmoment, das durch die dynamoelektrische Maschine (31) während einer Rückwärtsbewegung ausgegeben wird, eine Beziehung von 1:1,05 bis 1:1,2 herstellt, wobei das Drehmoment während der Rückwärtsdrehung größer als die maximale Drehmomentausgabe ist, wenn sich das elektrische Fahrzeug vorwärts bewegt, wobei eine Form in Umfangsrichtung des Rotors (6) an jedem Pol nicht-symmetrisch ist.

2. Elektrisches Hybridfahrzeug, das eine dynamoelektrische Dauermagnetmaschine (31) verwendet, nach Anspruch 1, wobei das Verhältnis zwischen der normalen und der Umkehrdrehung eine Beziehung von 1:1,05 bis 1:1,2 herstellt, wodurch das Drehmoment bei der Umkehrdrehung größer wird.

3. Elektrisches Hybridfahrzeug, das eine dynamoelektrische Dauermagnetmaschine (31) verwendet, nach Anspruch 1 oder 2,
wobei eine Breite in Rotationsrichtung eines Dauermagnet-Einfügungslochs, das in dem Rotoreisenkern (7) vorgesehen ist, größer als eine Breite des Dauermagneten (8) ist und ein Raum (10), der durch einen Längenunterschied zwischen den beiden entsteht, in einer Vorwärtsbewegungsseite des elektrischen Fahrzeugs vorgesehen ist.

4. Elektrisches Hybridfahrzeug, das eine dynamoelektrische Dauermagnetmaschine (31) verwendet, nach Anspruch 1 oder 2,
wobei ein Dauermagnet-Einfügungsloch, das in dem Rotoreisenkern (7) vorgesehen ist, in einem vorgegebenen geneigten Winkel (θ) in Bezug auf die Umfangsrichtung vorgesehen ist, so dass ein Abstand von dem Rotationsspalt (5) in der normalen Rotationsseite der dynamoelektrischen Maschine (31) größer ist und der Dauermagnet (8) in das Einfügungsloch eingefügt wird.

5. Elektrisches Hybridfahrzeug, das eine dynamoelektrische Dauermagnetmaschine (31) verwendet, nach Anspruch 4, wobei der geneigte Winkel (θ) 10 bis 45 Grad beträgt (mechanischer Winkel).

6. Elektrisches Hybridfahrzeug, das eine dynamoelektrische Dauermagnetmaschine (31) verwendet, nach Anspruch 1 bis 3, wobei eine Querschnittsform in Rotationsrichtung des Dauermagnet-Einfügungslochs und des Dauermagneten (8) eine rechtekkige Form ist.

7. Elektrisches Hybridfahrzeug, das eine dynamoelektrische Dauermagnetmaschine (31) verwendet, nach Anspruch 1 bis 3, wobei eine Querschnittsform in Rotationsrichtung des Dauermagnet-Einfügungslochs und des Dauermagneten (8) eine Bogenform ist.

8. Elektrisches Hybridfahrzeug, das eine dynamoelektrische Dauermagnetmaschine (31) verwendet, nach irgendeinem der Ansprüche 1 bis 7, wobei ein Verhältnis zwischen der Breite in Rotationsrichtung des Dauermagnet-Einfügungslochs, das in dem Rotoreisenkern (7) vorgesehen ist, und der Breite in Rotationsrichtung des Dauermagneten 1:0,5 bis 1:0,9 beträgt.

## Revendications

1. Véhicule électrique hybride utilisant une machine électrodynamique du type à aimant permanent (31), comprenant:
une machine électrodynamique du type à aimant permanent (31), ladite machine électrodynamique du type à aimant permanent (31) comprenant un stator (1) muni d'un noyau de fer formant stator (2) autour duquel un bobinage de stator est enroulé et un rotor (6) disposé dans ledit stator (1) avec un intervalle d'écartement de rotation (5), comprenant une pluralité d'aimants permanents (8), disposés et fixés à l'intérieur d'un noyau de fer formant rotor (7) dans une direction périphérique et comprenant des pôles auxiliaires en saillie;
ladite machine électrodynamique (31) et un moteur thermique (30) étant raccordés en série à un arbre d'entraînement (37); et
aucun mécanisme de commutation n'étant prévu entre les déplacements en marche avant et en marche arrière;
**caractérisé en ce que** un rapport entre un couple maximum fourni par ladite machine électrodynamique (31) lorsque le véhicule électrique se déplace en marche avant et un couple fourni par ladite machine électrodynamique (31) lorsque le véhicule électrique se déplace en marche arrière se situe dans une fourchette allant de 1:1.05 à 1:1.2, dans lequel le couple durant la rotation dans le sens inverse est supérieur au couple maximum produit lorsque le véhicule électrique se déplace en marche avant, dans lequel une forme dudit rotor (6) dans un plan circonférentiel est asymétrique au niveau de chaque pôle.

2. Un véhicule électrique hybride utilisant une machine électrodynamique du type à aimant permanent (31) comme revendiqué dans la revendication 1, dans lequel le rapport entre le sens de rotation normal et inverse se situe dans une fourchette allant de 1:1.05 à 1:1.2, le couple dans le sens de rotation inverse augmentant en l'occurrence.

3. Un véhicule électrique hybride utilisant une machine électrodynamique du type à aimant permanent (31) comme revendiqué dans la revendication 1 ou 2, dans lequel une largeur dans un sens de rotation d'un orifice d'insertion d'un aimant permanent prévu à l'intérieur dudit noyau de fer formant rotor (7) est supérieure à une largeur dudit aimant permanent (8) et un intervalle d'écartement (10), résultant d'une différence de longueur entre ces deux éléments, est défini dans un sens de déplacement en marche avant dudit véhicule électrique.

4. Un véhicule électrique hybride utilisant une machine électrodynamique du type à aimant permanent (31) comme revendiqué dans la revendication 1 ou 2, dans lequel un orifice d'insertion d'un aimant permanent ménagé à l'intérieur dudit noyau de fer formant rotor (7) est prévu avec un angle d' inclinaison prédéterminé (θ) par rapport à une direction circonférentielle, de telle sorte qu'une distance par rapport à l'intervalle d'écartement de rotation (5) est plus grande dans le sens normal de rotation de la machine électrodynamique (31) et ledit aimant permanent (8) est inséré dans ledit orifice d'insertion.

5. Un véhicule électrique hybride utilisant une machine électrodynamique du type à aimant permanent (31) comme revendiqué dans la revendication 4, dans lequel ledit angle d'inclinaison déterminé au préalable (θ) se situe dans une fourchette comprise entre 10 et 45 degrés (angle mécanique).

6. Un véhicule électrique hybride utilisant une machine électrodynamique du type à aimant permanents (31) comme revendiqué dans les revendications 1 à 3, dans lequel une forme de la section transversale, dans le sens de la rotation, dudit trou d'insertion de l'aimant permanent et dudit aimant permanent (8) est une forme rectangulaire.

7. Un véhicule électrique hybride utilisant une machine électrodynamique du type à aimant permanent (31) comme revendiqué dans les revendications 1 à 3, dans lequel une forme de la section transversale, dans le sens de la rotation, dudit trou d'insertion de l'aimant permanent et dudit aimant permanent (8) est une forme en arc de cercle.

8. Un véhicule électrique hybride utilisant une machine électrodynamique du type à aimant permanent (31) comme revendiqué dans l'une quelconque des revendications 1 à 7, dans lequel un rapport entre une largeur, dans le sens de la rotation, de l'orifice d'insertion de l'aimant permanent ménagé à l'intérieur dudit noyau de fer formant rotor (7) et une largeur, dans le sens de la rotation, dudit aimant permanent se situe dans une fourchette comprise entre 1:0.5 et 1:0.9.
